# FASCICULE DE BREVET EUROPEEN

(11) **EP 0 886 394 B1**
(45) Date de publication et mention de la délivrance du brevet: **13.12.2000**
(21) Numéro de dépôt: 98401454.8
(22) Date de dépôt: 15.06.1998
(51) Int. Cl.: H04B 10/08, G01M 11/00

(54) **Procédé pour la localisation par réflectométrie d'un défaut au niveau d'une liaison de transmission optique et dispositif de localisation appliquant ce procédé**
Verfahren zur reflektrometrischen Fehlerlokalisierung in einer optischen Übertragungsverbindung und Vorrichtung zur Anwendung dieses Verfahrens
Method for fault locating by reflectometry in an optical transmission link and locating apparatus using this method

(30) Priorité: 19.06.1997 FR 9707631
(43) Date de publication de la demande: 23.12.1998
(73) Titulaire: ALCATEL, 75008 Paris (FR)
(72) Inventeur: Gautheron, Olivier, 78960 Voisin le Bretonneux (FR); Letellier, Vincent, 75013 Paris (FR)
(74) Mandataire: Lamoureux, Bernard

(56) Documents cités:
- FURUKAWA S ET AL: "ENHANCED COHERENT OTDR FOR LONG SPAN OPTICAL TRANSMISSION LINES CONTAINING OPTICAL FIBER AMPLIFIERS" IEEE PHOTONICS TECHNOLOGY LETTERS, vol. 7, no. 5, 1 mai 1995, pages 540-542, XP000506802
- SUMIDA M ET AL: "HIGH-ACCURATE FAULT LOCATION TECHNOLOGY USING FSK-ASK PROBE BACKSCATTERING REFLECTOMETRY IN OPTICAL AMPLIFIER SUBMARINE TRANSMISSION SYSTEMS" JOURNAL OF LIGHTWAVE TECHNOLOGY, vol. 14, no. 10, octobre 1996, pages 2108-2116, XP000631507
- "FAULT DETECTION AND ISOLATION IN OPTICAL TRANSMISSION SYSTEMS USING OPTICAL AMPLIFIERS" IBM TECHNICAL DISCLOSURE BULLETIN, vol. 38, no. 5, 1 mai 1995, pages 59-61, XP000519496

## Description

L'invention concerne un procédé pour la localisation d'un défaut à l'aide d'un réflectomètre à détection cohérente placé au niveau d'un terminal de cette liaison.

Elle concerne aussi les dispositifs de localisation de défaut mettant en oeuvre ce procédé.

Le bon fonctionnement des réseaux de transmission optique à multiplexage en longueur d'onde implique de pouvoir contrôler les éléments constitutifs essentiels de ces réseaux que constituent les liaisons de transmission.

Ceci est particulièrement important, lorsque ces liaisons sont amplifiées, car il faut alors pouvoir s'assurer que la transmission des signaux est correctement réalisée quelle que soit la longueur d'onde considérée dans la gamme prévue de longueurs d'onde, étant entendu qu'une défaillance au niveau d'un amplificateur de liaison peut avoir des effets différents suivant les longueurs d'onde des signaux transmis.

Une solution connue pour vérifier le bon fonctionnement d'une liaison de transmission optique consiste à placer un réflectomètre à détection cohérente, au niveau d'un terminal par l'intermédiaire de laquelle cette liaison est susceptible de recevoir au moins un signal optique de longueur d'onde déterminée, pour, d'une part, émettre des impulsions de mesure ayant une durée et un taux de répétition déterminés sur la liaison, et d'autre part localiser un éventuel défaut à partir du signal de réflectométrie obtenu par l'intermédiaire d'un récepteur hétérodyne du réflectomètre. Un signal de charge dont la longueur d'onde est différente de celle des impulsions de mesure est classiquement associé aux impulsions de mesure pour maintenir un niveau de puissance constant dans la liaison de transmission, lorsque celle-ci est amplifiée, et par conséquent la qualité du signal de réflectométrie.

Une telle solution n'est pas exploitable, lorsqu'un filtrage est mis en oeuvre, par exemple au niveau d'une unité de branchement de réseau, pour extraire un signal de longueur d'onde déterminée afin de le transmettre par une liaison de dérivation vers un terminal déterminé, dit de branche. En effet, le signal de charge n'est pas dérivé vers le terminal avec les impulsions de mesure entre lesquelles il est intercalé.

L'invention propose donc un procédé pour la localisation d'un défaut à l'aide d'un réflectométre à détection cohérente placé au niveau d'un terminal et agencé pour envoyer des impulsions de mesure sur la liaison de transmission et un signal de charge se combinant avec ces impulsions de mesure.

Selon une caractéristique de l'invention, le signal optique de charge est choisi de même longueur d'onde que les impulsions de mesure, avec lesquelles il se combine, et avec une largeur spectrale étendue conduisant à ce que la puissance qu'il développe dans la bande étroite de mesure du réflectométre soit négligeable L'invention propose aussi un dispositif de localisation de défaut au niveau d'une liaison de transmission optique. notamment d'une branche d'un réseau optique où les signaux à transmettre sont spectralement multiplexés.

Selon une caractéristique de l'invention, ce dispositif comporte un réflectométre à détection cohérente mettant en oeuvre le procédé de charge défini ci-dessus pour produire un signal optique de charge ayant, d'une part, même longueur d'onde que les impulsions de mesure que ce réflectométre génère et avec lesquelles ce signal de charge se combine et ,d'autre part, une largeur spectrale étendue choisie pour que la puissance développée par ce signal de charge, dans l'étroite bande de mesure alors exploitée par ce réflectomètre, soit négligeable.

L'invention, ses caractéristiques et ses avantages sont précisés dans la description qui suit en liaison avec les figures évoquées ci-dessous.

La figure 1 présente un schéma de principe relatif à un réseau de transmission optique auquel s'applique plus particulièrement l'invention.

La figure 2 un diagramme d'émission pour un réflectométre tel que classiquement mis en oeuvre.

La figure 3 présente un diagramme d'émission pour un réflectomètre tel que mis en oeuvre dans le procédé selon l'invention.

La figure 4 présente un schéma de principe d'un dispositif de localisation selon l'invention.

La figure 5 présente un schéma de principe d'une variante de dispositif de localisation selon l'invention.

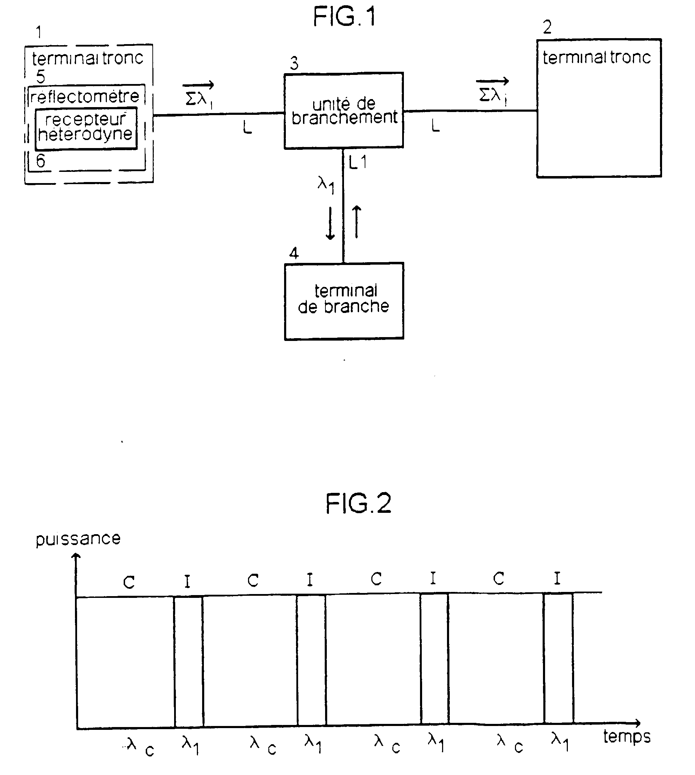

Le sous-ensemble de réseau de transmission optique d'un système de communications présenté en figure 1 comporte une liaison de transmission optique L installée entre deux terminaux 1 et 2, dits terminaux troncs d'un réseau de transmission optique à multiplexage en longueur d'onde.

Une unité de branchement 3 est intercalée sur la liaison L entre les deux terminaux troncs pour permettre de d'extraire une ou plusieurs longueurs d'onde parmi celles qui sont susceptibles d'être émises par l'un des terminaux troncs sur la liaison L, ce terminal émetteur étant ici supposé être le terminal tronc 1.

Dans l'exemple envisagé, il est supposé que l'unité de branchement 3 permet d'extraire un signal optique porteur modulé de longueur d'onde donnée par exemple λ₁, au profit d'un terminal de branche 4, parmi la somme Σλᵢ des longueurs d'onde susceptibles d'être émises par le terminal tronc émetteur 1 sur la liaison L. Cette extraction est supposée réalisée par un filtrage sélectif, par exemple par l'intermédiaire d'un réseau de Bragg qui permet de ne transmettre que le seul signal de longueur d'onde λ₁ au terminal de branche 4, via la liaison optique L1 reliant ce dernier à l'unité de branchement 3, si tel est le choix fait.

Pour vérifier le bon fonctionnement de la liaison optique L, il est connu de placer un réflectomètre à détection cohérente 5 au niveau du terminal tronc émetteur 1 pour lui faire émettre sur la liaison L des impulsions de mesure I de courte durée, par exemple de l'ordre de trente microsecondes, à une longueur d'onde donnée, avec un taux de répétition choisi en fonction de la longueur de la liaison. Un signal de charge C, dont la longueur d'onde λ_{c} est différente de celle des longueurs d'onde exploitées pour la transmission d'informations par la liaison L est intercalé entre les impulsions successives, comme montré sur la figure 2, pour permettre de maintenir un niveau de puissance constant dans la liaison L ici supposée amplifiée par l'intermédiaire d'au moins un amplificateur optique, non représenté. Ceci a pour objectif d'obtenir un signal de réponse de qualité suffisante au niveau d'un récepteur hétérodyne 6 que comporte le réflectométre 5.

Si une unité de branchement 3 ne dérivant que le signal de longueur d'onde λ₁ est insérée sur la liaison L, elle ne peut transmettre que les impulsions de mesure émises à cette longueur d'onde par le réflectomètre 5 et pas le signal de charge via la liaison L1 vers le terminal de branche 4 qu'elle dessert. Il n'est alors pas possible de rechercher la présence de défaut sur la liaison L1 depuis le terminal de tronc 1.

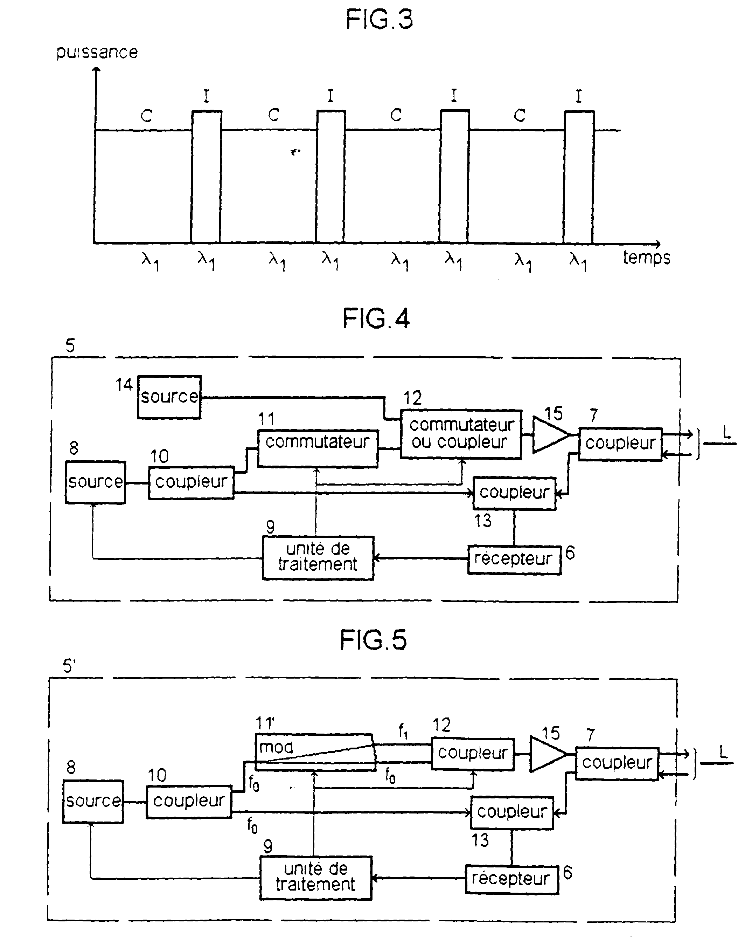

Selon l'invention, dans la mesure où la bande électrique du récepteur hétérodyne 6 que comporte le réflectomètre 5 est étroite, par exemple de l'ordre de 30 Khz pour les impulsions de trente microsecondes envisagées plus haut, il est envisageable d'utiliser un signal de charge C de même longueur d'onde que les impulsions de mesure, soit par exemple de longueur d'onde λ₁ comme représenté sur la figure 3. Ce signal de charge est destiné à maintenir un niveau de puissance optique moyen dans la liaison évitant l'apparition de variations excessives.

Si ce signal de charge C à une largeur spectrale suffisante, par exemple supérieure à 100 MHz, la quantité de puissance qu'il génère dans la bande de mesure de 30 KHz du récepteur hétérodyne 6 est très faible et elle peut être négligée dans la mesure où elle n'a pas d'influence réelle sur les résultats des mesures effectuées par le réflectométre 5 à partir des impulsions qu'il émet.

Si comme envisagé plus haut, il existe une unité de branchement 3 intercalée sur la liaison L pour dériver vers un terminal de branche le signal de longueur d'onde λ1 émanant du terminal tronc émetteur 1, il est donc possible de vérifier la portion de liaison L située entre ce terminal tronc 1 et l'unité de branchement 3 ainsi que la liaison Ll reliant cette unité de branchement au terminal de branche 4 . Il est alors possible de localiser un éventuel défaut à l'aide du réflectomètre 5 et de manière classique en la matière à partir d'impulsions de mesure I de longueur d'onde λ₁ entre lesquelles est intercalé un signal de charge C de même longueur d'onde, puisque ces impulsions et ce signal traversent l'unité de branchement tant dans un sens de transmission que dans l'autre. Une telle localisation et les moyens pour la mettre en oeuvre sont par exemple décrits dans l'article en langue anglaise intitulé "Enhanced Coherent OTDR for Long Span Optical Transmission Lines Containing Optical Fiber Amplifiers" publié par S. FURUKAWA & dans le n° 5 du volume 7 de la revue IEEE PHOTONICS TECHNOLOGY LETTERS en mai 1995.

Un exemple de dispositif de localisation est schématiquement représenté sur la figure 4, il est supposé principalement constitué par un réflectomètre à détection cohérente 5 accouplé à une liaison L par l'intermédiaire d'un coupleur optique d'émission-réception 7, dit de branchement. Ce dernier comporte un port de sortie qui lui permet d'émettre un signal optique de mesure via la liaison L et à partir du terminal tronc 1 où ce réflectomètre est supposé situé. Il lui permet aussi de recevoir le signal optique de mesure en retour après transmission successive dans un sens, comme indiqué ci-dessus,puis dans l'autre après réflexion. Cette réflexion s'effectue par exemple jusqu'au niveau du terminal de tronc 3 situé à l'autre extrémité de la liaison L ou encore jusqu'au niveau d'un terminal de branche 4 relié à la liaison L par une unité de branchement 3 insérée en un point intermédiaire de la liaison L. Le réflectomètre 5 comporte classiquement une source 8 capable de produire un signal optique de longueur d'onde déterminée choisie dans la gamme des longueurs d'onde susceptibles d'être exploitées par la liaison optique L dont il a été indiqué précédemment qu'elle était de type WDM (Wavelength Division Multiplexing en langue anglaise). La longueur d'onde fournie par la source 8 est ici supposée fixée par l'intermédiaire d'une unité de traitement 9 du réflectomètre qui permet de commander la source pour en obtenir un signal de longueur d'onde déterminé dans la gamme des longueurs d'onde prévues. par exemple entre 1,545 et 1,565 µm. Ce signal optique de longueur d'onde déterminé est transmis par l'intermédiaire d'un coupleur optique 10 à un générateur d'impulsions 11 et à un autre coupleur optique 13 situé en entrée du récepteur hétérodyne du réflectométre.

Comme usuel en la matière, l'unité de traitement 9 est supposée organisée autour d'au moins un et éventuellement plusieurs processeurs, par exemple un processeur de gestion et un processeur de traitement de signal, et elle comporte une base de temps, des mémoires et des interfaces spécialisées, ces éléments constitutifs n'étant pas représentés ici.

Le générateur d'impulsions 11 est par exemple constitué par un commutateur acousto-optique et il est supposé supervisé par l'unité de traitement 9, il permet de générer, à partir du signal reçu de la source 8, des impulsions de mesure de longueur d'onde λ₁ de durée déterminée et avec un taux de répétition donné, fonction comme on l'a vu de la longueur de la liaison surveillée. Il assure aussi un très faible déplacement de fréquence du signal impulsionnel qu'il produit par rapport au signal qu'il reçoit de la source 8 pour créer l'écart de fréquence nécessaire au fonctionnement du récepteur hétérodyne 6 du réflectomètre.

Les impulsions de mesure produites par le générateur d'impulsions 11 sont transmises à une entrée d'un organe 12 dont une autre entrée reçoit le signal de charge C que fournit une source optique 14. Ce signal de charge C est généré de manière connue en soi pour avoir une longueur d'onde identique à celle des impulsions de mesure et une largeur spectrale étendue choisie pour que la puissance qu'il développe soit négligeable dans l'étroite bande de mesure alors exploitée par le réflectomètre 5.

L'organe 12 est par exemple un commutateur optique commandé par l'unité de traitement 9 et il laisse transiter par sa sortie un signal optique composite où le signal de charge C s'intercale entre les impulsions de mesure auxquelles il se substitue dans les intervalles de temps au cours desquels ces impulsions ne sont pas émises.

Alternativement, l'organe 12 est susceptible d'être de type coupleur, il reçoit identiquement les impulsions de mesure de longueur d'onde λ₁ en provenance du générateur d'impulsions 11 par une entrée et le signal optique de charge C de même longueur d'onde λ₁ en provenance de la source optique 14 par une autre entrée. Par contre, le signal apparaissant en sortie de cet organe 12 coupleur est constitué par la superposition des impulsions de mesure de longueur λ₁ au signal de charge de même longueur d'onde.

Quel que soit le cas, le signal optique. qui apparaît en sortie de l'organe 12 choisi, est transmis au coupleur de branchement 7, classiquement au travers d'au moins un amplificateur optique 15, afin d'être émis sur la liaison L.

Comme connu, suite à une telle émission, le signal réfléchi, par la liaison que les impulsions de mesure et le signal de charge parcourent, est orienté par le coupleur de branchement 7 vers le coupleur 13 où il est mixé avec le signal de longueur d'onde λ₁ en provenance de la source via le coupleur 10. Le signal optique obtenu en sortie du coupleur 13 est transmis au récepteur hétérodyne 6 du réflectomètre comme connu en ce domaine. Ce récepteur fournit un signal sous forme électrique à l'unité de traitement 9 qui fournit l'information de localisation de défaut par l'intermédiaire de moyens d'interface machine-homme, par exemple de type écran ou imprimante comme connu en la matière.

Bien entendu, la localisation des défauts est susceptible d'être effectuée en mettant en oeuvre le procédé de charge décrit ci-dessus longueur d'onde par longueur d'onde pour l'ensemble de la gamme prévue en émission à partir d'un terminal tronc donné sur une liaison de transmission optique à laquelle ce terminal est relié à des fins d'émission.

Une variante monosource de réalisation monosource est schématiquement représentée sur la figure 5, une partie des éléments constitutifs qu'elle comporte et en particulier les éléments 6 à 10, 13 et 15 correspondent à ceux prévus en relation avec la figure 4.

La source 8 produit comme précédemment un signal optique de longueur d'onde déterminée supposée fixée par l'intermédiaire de l'unité de traitement 9 du réflectométre. Ce signal optique est orienté vers un coupleur optique 10 permettant de le diffuser d'une part vers un modulateur acousto-optique 11', d'autre part vers le coupleur optique 13 où ce signal optique est mixé avec le signal optique en retour après transmission et réflexion comme précédemment.

Le modulateur acousto-optique 11' est supervisé par l'unité de traitement 9 et permet de générer des impulsions de mesure de durée déterminée avec un taux de répétition donné comme précédemment indiqué.

L'application d'une tension électrique au modulateur acousto-optique 11' permet de faire subir une déviation spatiale et un déplacement de fréquence au signal optique provenant de la source 8 par l'intermédiaire du coupleur 10. Il est ainsi possible de recueillir le signal optique de fréquence f₀ en sortie du modulateur 11' dans l'axe de la fibre par laquelle le signal est parvenu, en l'absence de tension de déviation, et, alternativement. lorsque la tension de déviation est appliquée, un signal optique de fréquence f₁ par une fibre angulairement décalée dans l'espace. de manière spécifique par rapport à l'axe d'alignement commun défini ci-dessus. Le signal optique de fréquence f₁ est par exemple décalé de 100MHz par rapport au signal optique de fréquence f₀ et il est découpé en courtes impulsions de mesure par application d'une tension de déviation appropriée. Le signal optique de fréquence f₀ apparaissant en sortie du modulateur en l'absence d'impulsions de mesure est exploité en tant que signal de charge. Les impulsions de mesure et le signal de charge sont séparément transmis à un organe 12 de type coupleur pour transmission au coupleur de branchement 7 qui les extrait vers la liaison L, tant que le décalage en fréquence n'est pas prohibitif, et en particulier dans l'hypothèse donnée en exemple ci-dessus. Une telle solution présente l'avantage de n'impliquer le réglage que d'une seule source lorsqu'un changement de longueur d'onde est rendu nécessaire pour des raisons de mesure de branches de liaison impliquant des longueurs d'onde différentes.

## Revendications

1. Procédé pour la localisation d'un défaut d'une liaison de transmission optique à l'aide d'un réflectomètre à détection cohérente qui est placé au niveau d'un terminal et qui est agencé pour envoyer des impulsions de mesure sur la liaison de transmission et un signal de charge se combinant aux impulsions de mesure. caractérisé en ce que le signal de charge est choisi de même longueur d'onde optique que les impulsions de mesure avec lesquelles il se combine et avec une largeur spectrale étendue conduisant à ce que la puissance qu'il développe dans la bande étroite de mesure du réflectomètre soit négligeable par rapport à celle développée par les impulsions de mesure.

2. Procédé, selon la revendication 1, caractérisé en ce qu'il prévoit une combinaison d'un signal de charge aux impulsions de mesure par superposition desdites impulsions audit signal de charge.

3. Procédé, selon la revendication 1, caractérisé en ce qu'il prévoit une combinaison d'un signal de charge aux impulsions de mesure par intercalation dudit signal de charge entre les impulsions de mesure.

4. Dispositif de localisation de défaut au niveau d'une liaison de transmission optique, notamment d'une branche d'un réseau de transmission optique à multiplexage en longueur d'onde, caractérisé en ce qu'il comporte un réflectomètre à détection cohérente mettant en oeuvre le procédé de charge selon la revendication 1 pour produire un signal de charge ayant, d'une part, même longueur d'onde optique que les impulsions de mesure que ce réflectomètre génère avec lesquelles ce signal de charge se combine et, d'autre part, une largeur spectrale étendue choisie pour que la puissance développée par ce signal de charge, dans l'étroite bande de mesure alors exploitée par ce réflectomètre, soit négligeable.

5. Dispositif, selon la revendication 4, caractérisé en ce qu'il comporte un réflectométre doté d'une source (8) fournissant un signal optique de longueur d'onde déterminée réglable à un modulateur acousto-optique (11') auquel est appliqué une tension électrique de commande lui permettant alternativement de transmettre par une première sortie le signal optique fourni par la source, en l'absence de tension électrique de commande, et par une seconde sortie décalée spatialement par rapport à la première sortie un signal optique dont la fréquence est décalée, lorsque la tension électrique est appliquée, les durées des phases de présence et d'absence de la tension de commande étant choisies de manière que le signal optique à fréquence décalée corresponde à une suite d'impulsions de mesure et que le signal non décalé corresponde à un signal exploitable en tant que signal de charge, ces deux signaux étant transmis à une entrée d'un coupleur de branchement (7) à une liaison de transmission, le décalage en fréquence entre signaux en sortie du modulateur étant choisi dans la gamme de décalage en fréquences propre au récepteur hétérodyne du réflectomètre.

6. Dispositif, selon la revendication 4, caractérisé en ce qu'il comporte un réflectomètre doté d'un organe (12), de type coupleur optique, lui permettant de superposer le signal de charge de longueur d'onde donnée (λ₁) qu'il reçoit par une première entrée et les impulsions de mesure de même longueur d'onde qu'il reçoit par une seconde entrée et de transmettre le signal optique obtenu à des fins d'émission sur une liaison optique à contrôler.

7. Dispositif, selon la revendication 4, caractérisé en ce qu'il comporte un réflectomètre doté d'un organe (12), de type commutateur optique commandé permettant d'intercaler le signal de charge de longueur d'onde donnée (λ₁) qu'il reçoit par une première entrée entre les impulsions même longueur d'onde qu'il reçoit par une seconde entrée et de transmettre le signal optique obtenu à des fins d'émission sur une liaison optique à contrôler.

## Claims

1. A process for locating a fault on an optical transmission link using a coherent detection reflectometer at a terminal and adapted to send over the transmission link measuring pulses and a loading signal which is combined with the measuring pulses, characterized in that the loading signal is chosen to have the same optical wavelength as the measuring pulses with which it is combined and an extended bandwidth so that the power that it develops in the narrow measuring band of the reflectometer is negligible compared to that developed by the measuring pulses.

2. A process according to claim 1 characterized in that it combines a loading signal with the measuring signals by superposing said pulses and said loading signal.

3. A process according to claim 1 characterized in that it combines a loading signal with the measuring pulses by interleaving said loading signal between the measuring pulses.

4. A device for locating a fault on an optical transmission link, in particular a branch of a wavelength-division multiplex optical transmission network, characterized in that it includes a coherent detection reflectometer implementing the loading process according to claim 1 to produce a loading signal having the same optical wavelength as the measuring pulses that the reflectometer generates and with which the loading signal is combined and an extended bandwidth such that the power developed by the loading signal in the narrow measuring band used by the reflectometer is negligible.

5. A device according to claim 4 characterized in that it includes a reflectometer having a source (8) supplying an optical signal at a given wavelength that can be varied to an acousto-optical modulator (11') to which is applied an electrical control voltage enabling it alternately to transmit via a first output the optical signal supplied by the source, in the absence of any electrical control voltage, and via a second output spatially offset relative to the first output an optical signal the frequency of which is shifted, when the electrical voltage is applied, the durations of the phases of presence and of absence of the control voltage being chosen so that the optical signal at the shifted frequency corresponds to a sequence of measuring pulses and the non-shifted signal corresponds to a signal that can be used as a loading signal, these two signals being transmitted to an input of a branch coupler (7) connected to a transmission link, the frequency offset between modulator output signals being chosen in the range of frequency offsets appropriate to the heterodyne receiver of the reflectometer.

6. A device according to claim 4 characterized in that it includes a reflectometer having an optical coupler type unit (12) enabling it to superpose the loading signal at a given wavelength (λ₁) that it receives via a first input and the measuring pulses at the same wavelength that it receives via a second input and to transmit the optical signal obtained for purposes of transmission over an optical link to be tested.

7. A device according to claim 4 characterized in that it includes a reflectometer having a commanded optical switch type unit (12) for interleaving the loading signal at a given wavelength (λ₁) that it receives via a first input between the pulses at the same wavelength that it receives via a second input and transmitting the optical signal obtained for purposes of transmission over an optical link to be tested.

## Patentansprüche

1. Verfahren zur Lokalisierung eines Fehlers einer optischen Übertragungsverbindung mit Hilfe eines Reflektometers, das sich an einem Endgerät befindet und das dafür ausgelegt ist, Meßimpulse auf die Übertragungsleitung und ein Lastsignal zu senden, das mit den Meßimpulsen kombiniert wird, dadurch gekennzeichnet, daß das Lastsignal mit der gleichen optischen Wellenlänge wie die Meßimpulse, mit welchen es kombiniert wird, und mit einer großen spektralen Breite gewählt wird, die dazu führt, daß die Leistung, die es in dem schmalen Band der Messung des Reflektometers entwickelt, im Vergleich mit der durch die Meßimpulse entwickelten vernachlässigbar ist.

2. Verfahren nach Anspruch 1, dadurch gekennzeichnet, daß es eine Kombination eines Lastsignals mit den Meßimpulsen durch Überlagerung der Impulse mit dem Lastsignal vorsieht.

3. Verfahren nach Anspruch 1, dadurch gekennzeichnet, daß es eine Kombination des Lastsignals mit den Meßimpulsen durch Zwischenschaltung des Lastsignals zwischen die Meßimpulse vorsieht.

4. Vorrichtung zur Fehlerlokalisierung in einer optischen Übertragungsverbindung, insbesondere eines Zweigs eines optischen Ubertragungsnetzes mit Wellenlängenmultiplex, dadurch gekennzeichnet, daß sie ein Reflektometer mit kohärenter Erfassung umfaßt, das das Verfahren der Aufgabe nach Anspruch 1 durchführt, um ein Lastsignal mit einerseits der gleichen optischen Wellenlänge wie die Meßimpulse, die dieses Reflektometer erzeugt, mit welchen dieses Lastsignal kombiniert wird, und andererseits einer großen spektralen Breite zu erzeugen, die gewählt wird, damit die durch dieses Lastsignal im dann von diesem Reflektometer genutzten schmalen Band der Messung entwickelte Leistung vernachlässigbar ist.

5. Vorrichtung nach Anspruch 4, dadurch gekennzeichnet, daß sie ein Reflektometer umfaßt, das mit einer Quelle (8) ausgestattet ist, die ein optisches Signal mit einer einstellbaren bestimmten Wellenlänge an einen akusto-optischen Modulator (11') liefert, an welchen eine elektrische Steuerspannung angelegt wird, die es ihm gestattet, alternativ bei Nichtvorhandensein der elektrischen Steuerspannung über einen ersten Ausgang das von der Quelle gelieferte optische Signal und, wenn die elektrische Spannung angelegt ist, über einen hinsichtlich des ersten Ausgangs räumlich versetzten zweiten Ausgang ein optisches Signal zu übertragen, dessen Frequenz verschoben ist, wobei die Dauern der Phasen von Vorhandensein und Nichtvorhandensein der Steuerspannung so gewählt werden, daß das optische Signal mit verschobener Frequenz einer Meßimpulsfolge entspricht und das nicht verschobene Signal einem als Lastsignal nutzbaren Signal entspricht, wobei diese beiden Signale zu einem Eingang eines Kopplers (7) zum Anschluß an eine Übertragungsverbindung übertragen werden, wobei die Frequenzverschiebung zwischen Signalen am Ausgang des Modulators im dem Heterodynempfänger des Reflektometers eigenen Frequenzverschiebungsbereich gewählt wird.

6. Vorrichtung nach Anspruch 4, dadurch gekennzeichnet, daß sie ein Reflektometer umfaßt, das mit einer Einrichtung (12) vom Typ eines optischen Kopplers ausgestattet ist, die es ihm gestattet, das Lastsignal mit gegebener Wellenlänge (λ₁), das sie über einen ersten Eingang empfängt, und die Meßimpulse mit der gleichen Wellenlänge, die sie über einen zweiten Eingang empfängt, zu uberlagern und das erhaltene optische Signal zu Sendezwecken auf eine zu prüfende optische Verbindung zu übertragen.

7. Vorrichtung nach Anspruch 4, dadurch gekennzeichnet, daß sie ein Reflektometer umfaßt, das mit einer Einrichtung (12) vom Typ eines gesteuerten optischen Schalters ausgestattet ist, die gestattet, das Lastsignal mit gegebener Wellenlänge (λ₁), das sie über einen ersten Eingang empfängt, zwischen die Impulse mit der gleichen Wellenlänge, die sie über einen zweiten Eingang empfängt, zu schalten und das erhaltene optische Signal zu Sendezwecken auf eine zu prüfende optische Leitung zu übertragen.
